# EUROPÄISCHE PATENTSCHRIFT

(11) **EP 1 704 268 B1**
(45) Veröffentlichungstag und Bekanntmachung des Hinweises auf die Patenterteilung: **02.05.2018**
(21) Anmeldenummer: 04819229.8
(22) Anmeldetag: 26.11.2004
(51) Int. Cl.: C25B 1/04, C25B 9/00

(54) **VERFAHREN UND VORRICHTUNG ZUR HERSTELLUNG EINES GASES ODER MEHRERER GASE**
METHOD AND DEVICE FOR PRODUCING ONE GAS OR SEVERAL GASES
PROCEDE ET DISPOSITIF POUR PRODUIRE UN OU PLUSIEURS GAZ

(30) Priorität: 28.11.2003 DE 10355592; 18.12.2003 DE 10359509
(43) Veröffentlichungstag der Anmeldung: 27.09.2006
(73) Patentinhaber: ROINER, Franz, 94372 Rattiszell (DE); Gensch, Henning, 30657 Hannover (DE); Roiner, Maria, 94372 Rattiszell (DE); Gensch, Barbara, 30657 Hannover (DE)
(72) Erfinder: ROINER, Franz, 94372 Rattiszell (DE)
(74) Vertreter: Zinnecker, Armin
(86) Internationale Anmeldenummer: PCT/EP2004/013452
(87) Internationale Veröffentlichungsnummer: WO 2005/052214

(56) Entgegenhaltungen:
- EP-A- 0 650 929
- WO-A-90/15659
- US-A- 5 348 683
- US-A- 5 401 371
- PATENT ABSTRACTS OF JAPAN Bd. 2000, Nr. 12, 3. Januar 2001 (2001-01-03) & JP 2000 265290 A (MATSUSHITA REFRIG CO LTD), 26. September 2000 (2000-09-26)
- PATENT ABSTRACTS OF JAPAN Bd. 008, Nr. 205 (C-243), 19. September 1984 (1984-09-19) & JP 59 092028 A (NIPPON PAINT KK), 28. Mai 1984 (1984-05-28)

## Beschreibung

Die Erfindung betrifft ein Verfahren zur Herstellung eines oder mehrerer Gase. Bei dem Verfahren wird eine Flüssigkeit, die das herzustellende Gas enthält, elektrolytisch behandelt. Durch die Elektrolyse werden eines oder mehrere Gase gebildet. Insbesondere dient das Verfahren dazu, Wasserstoff oder Wasserstoff und Sauerstoff, letzteres insbesondere als Mischung (Knallgas), herzustellen.

Verfahren zur Herstellung von Wasserstoff oder von Wasserstoff und Sauerstoff oder von Knallgas sind bereits bekannt. Bei dem üblichen elektrolytischen Verfahren wird dafür Wasser verwendet. Die Wassermoleküle enthalten Wasserstoff und Sauerstoff. Allerdings sind der Wirkungsgrad und die Reaktionsgeschwindigkeit des vorbekannten Verfahrens verbesserungsbedürftig.

Aus der US-A 5 879 522 ist eine Vorrichtung zur elektrolytischen Herstellung von Wasserstoff und Sauerstoff bekannt, die eine Anodenkammer und eine Kathodenkammer aufweist, in denen elektrisch leitende Ultramikroelektrodenpartikel vorhanden sind, die mit der Kathode und der Anode jeweils in Kontakt stehen und die zur Verbesserung der Leitfähigkeit und zur Minimierung von Überspannungen dienen.

Aus der JP 2002-322584 A ist ein Verfahren zur Elektrolyse von Wasser bekannt, bei dem die Reaktion durch ein feines Juwelenpulver oder Steinpulver oder durch ein feines Pulver verschiedener Arten von Mineralen oder Metallen unterstützt wird. Die feinen Pulver sollen die Leitfähigkeit verbessern.

Die DE 100 16 591 C2 offenbart ein Verfahren zur Gewinnung von Wasserstoff, bei dem ein erster Elektrolyt im Innenraum einer Mikrohohlfaser und ein zweiter Elektrolyt außerhalb der Mikrohohlfaser bereitgestellt wird. Die Mikrohohlfaser trägt auf ihren Wandoberflächen getrennt Anode und Kathode.

Die US 2001/0050234 A1 offenbart eine Elektrolysezelle mit einer ersten Elektrode und einer zweiten Elektrode, zwischen denen eine Elektrolyt-Membran angeordnet ist. Für die Elektrolyt-Membran kann ein Elektronenaustauscherharz verwendet werden.

Aufgabe der Erfindung ist es, ein verbessertes Verfahren der eingangs angegebenen Art vorzuschlagen.

Erfindungsgemäß wird diese Aufgabe durch die Merkmale des Anspruchs 1 gelöst. In der Flüssigkeit ist ein Stoff, dem das oder eines der durch die Elektrolyse herzustellenden Gase anhaftet, vorhanden. Dieses Gas haftet diesem Stoff in Ionenbindung an.

Vorteilhafte Weiterbildungen der Erfindung sind in den Unteransprüchen beschrieben.

Vorteilhaft ist es, wenn dem in der Flüssigkeit vorhandenen Stoff Wasserstoff, vorzugsweise in Ionenbindung, anhaftet.

Vorzugsweise ist das herzustellende Gas Wasserstoff.

Die herzustellenden Gase können Wasserstoff und Sauerstoff sein. Dabei ist es möglich, Wasserstoff und Sauerstoff getrennt herzustellen. Es ist allerdings auch möglich, Wasserstoff und Sauerstoff in einer Mischung (Knallgas) herzustellen. Besonders vorteilhaft ist die native Herstellung von Knallgas. Nach dem erfindungsgemäßen Verfahren kann das Knallgas im richtigen (stöchiometrischen) Mischungsverhältnis hergestellt werden. Es kann in dieser Form verwendet werden, insbesondere zur Energieerzeugung.

Die Flüssigkeit, die das oder ein herzustellendes Gas enthält, ist vorzugsweise Wasser. Der Stoff, dem das oder ein herzustellendes Gas anhaftet, ist ein Ionenaustauscher. Insbesondere kann dieser Stoff ein Ionenaustauscherharz sein.

Vorzugsweise ist der Ionenaustauscher ein saurer, insbesondere ein stark saurer, Ionenaustauscher.

Der Stoff, dem das oder ein herzustellendes Gas anhaftet, bzw. der Ionenaustauscher kann gelförmig sein.

Vorteilhaft ist es, wenn der Ionenaustauscher eine Matrix, Ankergruppen und auszutauschende Ionen aufweist bzw. daraus besteht. Bei der Matrix kann es sich insbesondere um einen vernetzten Kunststoff, insbesondere vernetztes Polystyrol, handeln. Die Ankergruppen sind vorzugsweise Sulfonsäuregruppen (SO₃). Die auszutauschenden Ionen sind vorzugsweise Wasserstoffionen (H). Insbesondere kann der Ionenaustauscher die allgemeine chemische Formel R - SO₃ - H aufweisen.

Eine weitere vorteilhafte Weiterbildung ist dadurch gekennzeichnet, daß der Stoff, dem das oder ein herzustellendes Gas anhaftet, bzw. der Ionenaustauscher, insbesondere das Ionenaustauscher-Grundmaterial, katalytisch wirkende Stoffe enthält. Bei den katalytisch wirkenden Stoffen kann es sich insbesondere um stromleitende Stoffe, insbesondere stromleitende Folien, handeln. Die katalytisch wirkenden Stoffe können dem Stoff bzw. dem Ionenaustauscher bzw. dem lonenaustauscher-Grundmaterial beigemischt sein.

Nach einer weiteren vorteilhaften Weiterbildung enthält der Stoff, dem das oder ein herzustellendes Gas anhaftet, bzw. der Ionenaustauscher bzw. das lonenaustauscher-Grundmaterial katalytisch wirkende und/ oder gasliefernde Enzyme. Als derartige Enzyme werden vorzugsweise organischen Säuren, insbesondere Weinsäure verwendet. Die Enzyme können dem Stoff bzw. dem Ionenaustauscher bzw. dem Ionenaustauscherharz bzw. dem Ionenaustauscher-Grundmaterial beigefügt sein.

Eine Vorrichtung zur Durchführung des erfindungsgemäßen Verfahrens umfaßt einen Behälter mit einer Flüssigkeit und eine positive Elektrode und eine negative Elektrode, die an eine Stromquelle anschließbar oder angeschlossen sind. In der Flüssigkeit ist ein Ionenaustauscher vorhanden, dem das oder eines der bei der Elektrolyse herzustellenden Gase anhaftet.

Vorzugsweise ist eine Elektrode rohrförmig ausgestaltet.

In der Flüssigkeit, die das herzustellende Gas und einen Stoff, dem das herzustellende Gas anhaftet, enthält, insbesondere innerhalb der röhrförmigen Elektrode, kann ein Füllmaterial vorhanden sein. Bei diesem Material handelt es sich vorzugsweise um Watte.

In dem Füllmaterial ist vorzugsweise eine Säure vorhanden. Dieses Material ist vorzugsweise mit einer Säure benetzt. Bei der Säure handelt es sich vorzugsweise um Salzsäure.

Im Unterschied zur US 2001/0050234 A1 ist nach der Erfindung keine protonenleitende Membran erforderlich. Bei der Erfindung ist es möglich, den Ionenaustauscher, dem das oder ein herzustellendes Gas anhaftet, nicht in eine Membran einzubinden. Es ist möglich diesen Ionenaustauscher derart anzuordnen, daß er sowohl mit der Anode als auch mit der Kathode als auch mit der Flüssigkeit in Verbindung steht. Ferner ist es möglich, einen elektrisch nicht leitenden Stoff, dem das oder ein herzustellendes Gas anhaftet, insbesondere einen elektrisch nicht leitenden Ionenaustauscher, zu verwenden. Durch die Erfindung wird es ermöglicht, einen Stoff, dem das oder ein herzustellendes Gas anhaftet, insbesondere einen Ionenaustauscher, zu verwenden, bei dem die daran durch lonenbindung und/oder durch Van-der-Waals'sche Kräfte anhaftenden Randgruppen bei der Elektrolyse freigesetzt werden.

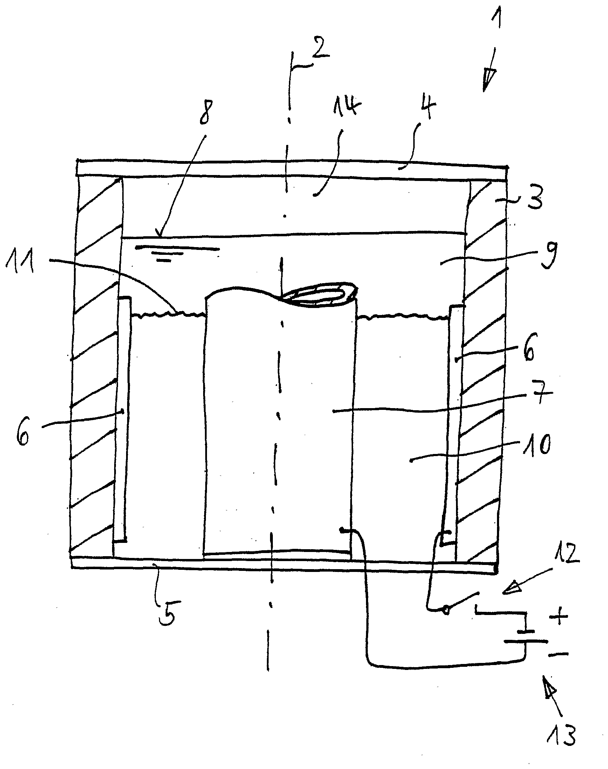

Ein Ausführungsbeispiel der Erfindung wird nachstehend anhand der beigefügten Zeichnung im einzelnen erläutert. In der Zeichnung zeigt die

| | |
|---|---|
| einzige Figur | eine Vorrichtung zur Herstellung von Knallgas in einer schematischen Ansicht. |

Die in der einzigen Figur gezeigte Vorrichtung umfaßt einen Behälter 1, der um die Mittenachse 2 rotationssymmetrisch ausgestaltet ist und der aus einem rohrförmigen Gehäuse 3 besteht, das durch einen oberen Deckel 4 und einen unteren Dekkel 5 abgeschlossen ist. Die gesamte Vorrichtung ist vorzugsweise länger als dargestellt ausgeführt.

An der Innenwand des Gehäuses 3 ist eine ringförmige äußere Elektrode 6 vorgesehen. Im Inneren des Gehäuses 3 befindet sich eine rohrförmige innere Elektrode 7. Der Behälter 1 ist bis zum Wasserspiegel 8 mit Wasser 9 gefüllt.

Zwischen den Elektroden 6 und 7 ist ein 10 vorhanden, der bis zur Höhe 11 gelförmig vorliegt.

Die äußere Elektrode 6 ist über einen Schalter 12 mit dem Pluspol einer Stromquelle 13, beispielsweise einer 12V-Autobatterie, verbunden. Der Minuspol der Stromquelle 13 ist mit der inneren Elektrode 7 verbunden. Die Polarität kann allerdings auch umgedreht werden.

Bei der dargestellten Ausführungsform liegt der Wasserspiegel 8 über der Höhe 11 des gelförmigen Ionenaustauschers 10 und über dem oben offenen Rohr der inneren Elektrode 7. Die Elektrode 7 kann allerdings auch geschlossen ausgebildet sein. Eine andere Möglichkeit besteht darin, daß die Elektrode 7 den Wasserspiegel 8 überragt. Ferner liegt in der dargestellten Ausführungsform die Höhe 11 des gelförmigen Ionenaustauschers 10 knapp unterhalb des oberen Endes der äußeren Elektrode 6. Die Vorrichtung kann allerdings auch derart ausgestaltet sein, daß diese Höhe 11 über dem oberen Ende der Elektrode 6 liegt. Die innere Elektrode 7 kann unten geschlossen oder offen sein. Sie kann ferner an ihrem unteren Ende offen sein oder dichtend mit dem unteren Deckel 5 verbunden sein.

Wenn der Schalter 12 geschlossen wird, findet in dem Behälter 1 eine elektrolytische Reaktion statt, bei der von der positiven äußeren Elektrode 6 negativ geladene Elektronen und Ionen angezogen werden. Positive Ionen wandern zur negativen inneren Elektrode 7. Auf diese Weise entsteht in dem Raum 14 zwischen dem Wasserspiegel 8 und dem oberen Deckel 4 Knallgas, wobei es sich um eine native Erzeugung von Knallgas handelt. Diese Reaktion wird durch den Ionenaustauscher 10 erheblich beschleunigt. Das Knallgas liegt im stöchiometrischen Verhältnis vor. Es kann aus dem Raum 14 abgezogen werden (in der Zeichnung nicht dargestellt). Dies kann diskontinuierlich (Batch-Betrieb) oder kontinuierlich erfolgen. Es ist ferner möglich, durch eine entsprechende Ausgestaltung des Behälters 1 den entstehenden Wasserstoff und den entstehenden Sauerstoff getrennt aufzufangen und abzuleiten.

Bei dem Ionenaustauscher 10 handelt es sich um einen stark sauren, gelförmigen mit Sulfonsäuregruppen als Ankergruppen. Der Ionenaustauscher hat die allgemeine chemische Formel R - SO₃ - H, wobei R eine Matrix, insbesondere eine vernetzte Polystyrol-Matrix bezeichnet, SO₃ eine Sulfonsäure-Ankergruppe und H Wasserstoff.

Vorzugsweise wird der 10 in Bewegung gehalten. Dies geschieht vorzugsweise derart, daß der 10 nicht absinkt. Der lonenaustauscher kann durch ein Wirbelbett-Verfahren in Bewegung gehalten werden. Wenn der in Bewegung gehalten wird, werden die Gasbildung und der Elektronenfluß verbessert.

Nach einer weiteren vorteilhaften Weiterbildung wird der in der Flüssigkeit in der Schwebe gehalten. Dies erfolgt vorzugsweise dadurch, daß der bzw. das Ionenaustauscher-Grundmaterial derart hergestellt sind, daß sie von sich aus in der Flüssigkeit, also in dem Wasser 9, in Schwebe bleiben.

Das Verfahren kann kontinuierlich durchgeführt werden. Hierzu kann der Ionenaustauscher 10 laufend zugeführt und abgeführt werde (in der Zeichnung nicht dargestellt). Der abgeführte kann regeneriert und erneut zugeführt werden.

Das Verfahren kann auch mehrstufig durchgeführt werden.

Das sich bildende Gas kann aus dem Raum 14 abgesaugt werden. Zu diesem Zweck ist es möglich, in diesem Raum 14 ein Vakuum zu erzeugen. Hierdurch kann ferner erreicht werden, daß das nach oben abziehende Gas den 10 mitreißt und auf diese Weise eine Durchmischung und Verteilung des Ionenaustauschers 10 bewirkt.

Der Druck und die Temperatur können so eingestellt werden, daß das Verfahren mit optimalem Wirkungsgrad arbeitet.

Bei praktischen Versuchen wurden die nachfolgend wiedergegebenen Meßwerte ermittelt:

### Beispiel 1:

| Versuch Nr. | Stromstärke (A) | Spannung (V) | Leistung (W) | Erzeugte Gasmenge (ml/min) | Energie pro Zeit (W) | Wirkungsgrad |
|---|---|---|---|---|---|---|
| 1 | 1,0 | 10,2 | 10,2 | 10 | 1,8 | 0,176 |
| 2 | 3,0 | 9,2 | 27,6 | 40 | 7,2 | 0,260 |
| 3 | 7,5 | 6,5 | 48,75 | 100 | 18,0 | 0,370 |
| 4 | 8,1 | 5,7 | 46,17 | 115 | 20,7 | 0,448 |

Der Versuch Nr. 1 ist ein Vergleichsversuch, der ohne Ionenaustauscher in Wasser durchgeführt wurde. Bei dem Versuch Nr. 2 wurde eine geringe Menge Ionenaustauscher verwendet. Der Versuch Nr. 3 wurde mit einer großen Menge Ionenaustauscher durchgeführt. Bei Versuch Nr. 4 wurde zusätzlich eine geringe Menge Salzsäure zugegeben.

Bei dem Versuch Nr. 1 wird ein Strom von 1,0 A bei einer Spannung von 10,2 V zugeführt, so daß die zugeführte elektrische Leistung 10,2 W beträgt. Dabei werden 10 ml/min Knallgas erzeugt, was einen Energieinhalt pro Zeit in Höhe von 1,8 W entpsricht. Daraus ergibt sich ein Wirkungsgrad von (1,8 : 10,2 =) 0,176.

Durch die Zugabe des Ionenaustauschers steigt die Stromstärke je nach zugegebener Menge über 3,0 auf 7,5 A, während die Spannung entsprechend über 9,2 V auf 6,5 V fällt. Die Menge des erzeugten Knallgases steigt über 40 ml/min auf 100 ml/min. Der Wirkungsgrad steigt über 0,260 auf 0,370.

Durch die Zugabe einer geringen Menge Salzsäure im Versuch Nr. 4 steigt die Stromstärke weiter auf 8,1 A, und die Spannung fällt weiter auf 5,7 V. Die Menge erzeugten Knallgases steigt weiter auf 115 ml/min, wodurch der Wirkungsgrad auf 0,448 ansteigt.

### Beispiel 2:

Es wurde die in der einzigen Figur gezeigte Versuchsanordnung verwendet, wobei allerdings die Polung umgedreht wurde. Das die Minus-Elektrode bildende Gehäuse 3 ist als Rohr mit einer Länge von 116 mm, einem Innendurchmesser von 26 mm und einem Außendurchmesser von 28 mm ausgestaltet. Die die Plus-Elektrode bildende innere Elektrode 7 ist als Rohr mit einer Länge von 116 mm, einem Innendurchmesser von 14 mm und einem Außendurchmesser von 16 mm ausgestaltet. Als Stromquelle 13 wird ein Batterieladegerät verwendet, das Gleichstrom mit einer Spannung von 12V abgibt. Als wurde Styrol-DVB der Firma Amberlit verwendet, der in Form von dunklen bernsteinfarbenen Kugeln vorliegt. Die funktionelle Gruppe dieses Ionenaustauschers wird von Sulfonsäure gebildet. Das Innere der inneren Elektrode 7 wurde mit Watte (ohne einen weiteren Zusatz) gefüllt.

Zur Durchführung der Versuche wird die Elektrodenanordnung mit 50 ml Trinkwasser gefüllt, was einer Stoffmenge von 2,75 mol entspricht. Die gesamte Anordnung wird vollständig "unter Wasser" gesetzt, so dass ein Flüssigkeitsaustausch zwischen dem Inneren der inneren Elektrode 7 und dem Ringraum zwischen der inneren Elektrode 7 und dem Gehäuse 3 stattfinden kann, und zwar sowohl über das obere Ende der inneren Elektrode 7 als auch über deren unteres Ende, also den Zwischenraum zwischen dem unteren Ende der inneren Elektrode 7 und dem unteren Deckel 5. Das Trinkwasser hat einen pH-Wert von 7,0, eine elektrische Leitfähigkeit von 266 *µ*S/cm (bei 25°C) und eine Wasserhärte von 5,4 dH°. Bei Anlegen der Gleichspannung ergeben sich in Abhängigkeit der zugegebenen Menge des Ionenaustauschers die nachfolgend wiedergegebenen Werte für die Stromstärke, die Spannung, die Leistung und die pro Zeit gebildete Masse Knallgas (KG), die als Normvolumen angegeben ist, wobei der bereits beschriebene verwendet wurde:

| Versuch Nr. | Stromstärke (A) | Spannung (V) | Leistung (W) | Erzeugte Gasmenge (ml/min) | Ionenaustauscher (ml) |
|---|---|---|---|---|---|
| 1 | 0,70 | 11,00 | 7,70 | 5,0 | 0 |
| 2 | 0,80 | 9,90 | 7,92 | 10,0 | 1 |
| 3 | 1,55 | 9,50 | 14,72 | 20,0 | 2 |
| 4 | 1,67 | 9,35 | 15,61 | 22,0 | 3 |
| 5 | 1,92 | 9,20 | 17,66 | 24,0 | 4 |
| 6 | 2,09 | 9,10 | 19,02 | 26,0 | 5 |
| 7 | 2,27 | 9,00 | 20,43 | 28,0 | 6 |
| 8 | 2,75 | 8,80 | 24,20 | 30,0 | 7 |
| 9 | 3,50 | 8,30 | 29,05 | 40,0 | 10 |
| 10 | 3,85 | 8,00 | 30,80 | 50,0 | 15 |
| 11 | 4,40 | 7,80 | 34,32 | 60,0 | 20 |
| 12 | 4,60 | 7,60 | 34,96 | 70,0 | 25 |

Im ersten Versuch wurde kein zugegeben. Es wurden 5,0 ml/min Knallgas erzeugt. Diese Menge wird durch die Zugabe von 1 ml Ionenaustauscher bereits verdoppelt. Die pro Minute erzeugte Menge Knallgas steigt mit der Erhöhung der Menge des Ionenaustauschers an.

### Beispiel 3:

Es wurde dieselbe Versuchsanordnung wie im Beispiel 2 verwendet, wobei allerdings die Länge des Gehäuses 3 und der inneren Elektrode 7 von 116 mm auf 270 mm vergrößert wurde. Ansonsten ist die Versuchsanordnung nicht geändert worden. Dabei ergaben sich folgende Meßwerte:

| Versuch Nr. | Stromstärke (A) | Spannung (V) | Leistung (W) | Erzeugte Gasmenge (ml/min) | Ionenaustauscher (ml) |
|---|---|---|---|---|---|
| 1 | 1,5 | 10,50 | 15,75 | 12 | 0 |
| 2 | 2,0 | 10,00 | 20,00 | 30 | 1 |
| 3 | 3,0 | 9,20 | 27,60 | 40 | 2 |
| 4 | 6,05 | 7,00 | 42,35 | 55 | 3 |
| 5 | 6,55 | 6,60 | 43,23 | 70 | 4 |
| 6 | 6,85 | 6,40 | 43,84 | 80 | 5 |
| 7 | 6,90 | 6,30 | 43,47 | 85 | 6 |
| 8 | 7,15 | 6,20 | 44,33 | 95 | 7 |
| 9 | 7,45 | 6,00 | 44,70 | 100 | 10 |
| 10 | 7,70 | 5,85 | 45,04 | 110 | 20 |
| 11 | 8,00 | 5,75 | 46,00 | 115 | 30 |
| 12 | 8,10 | 5,40 | 43,74 | 120 | 40 |

Das erfindungsgemäße Verfahren kann in der Weise durchgeführt werden, daß ein Stoff, dem das herzustellende Gas insbesondere in Ionenbindung anhaftet, z.B. ein saurer Kationentauscher, als Katalysator und Donator bei der Elektrolyse einer Flüssigkeit, insbesondere Wasser, zugegeben wird, so daß die Zerlegung des zu zerlegenden Stoffes, z.B. Wasser, um ein Vielfaches beschleunigt wird, wobei der zugegebene Stoff keine Säure und keine Base und keine lonentauschermembran ist. In einer besonderen Ausgestaltung wird z.B. bei der Elektrolyse von Wasser zur Herstellung von Wasserstoff und Sauerstoff oder Knallgas dem an sich bekannten Elektrolysevorgang ein Ionenaustauscher, insbesondere ein Kationenaustauscherharz und/oder ein Anionenaustauscherharz, zugegeben, das als Katalysator zur Erhöhung des Stromflusses dient und zugleich als Wasserstoff- und/oder Sauerstoffdonator zur Durchführung des Verfahrens beitragen kann. Auf diese Weise können bei einer Stromstärke von beispielsweise 3900 C/min je nach Ausgestaltung Wirkungsgrade von 0,6 bis 0,85 erreicht werden. Eine entsprechende Vorrichtung kann Knallgas in einer Menge von 14,6 l/h erzeugen. Die Vorrichtung zur Herstellung des Knallgases kann Bestandteil eines Motors sein und das für den Motor benötigte Knallgas nativ erzeugen. Auf diese Weise kann eine Verflüssigung und Lagerung des Knallgases überflüssig gemacht werden, da es laufend in der erforderlichen Menge erzeugt werden kann. Es ist allerdings auch möglich, Wasserstoff und Sauerstoff getrennt herzustellen und zu nutzen.

Im Inneren der rohrförmigen Elektrode 7 kann ein Füllmaterial vorhanden sein, insbesondere Watte. Dieses Material bzw. die Watte kann mit Säure, vorzugsweise Salzsäure, benetzt sein. Hierdurch läßt sich die Ausbeute erheblich steigern, wie im Beispiel 1, Versuch Nr. 4 angegeben.

Die elektrolytisch behandelte Flüssigkeit kann Wasser sein. Es sind aber auch andere Flüssigkeiten möglich, die das herzustellende Gas, z.B. Wasserstoff oder einen anderen Stoff, enthalten.

## Patentansprüche

1. Verfahren zur Herstellung eines oder mehrerer Gase, bei dem eine Flüssigkeit (9) elektrolytisch behandelt wird,
**dadurch gekennzeichnet,**
**dass** in der Flüssigkeit (9) ein (10) vorhanden ist, an dem das oder eines der herzustellenden Gase durch lonenbindung gebunden ist und dass der Ionenaustauscher in Bewegung gehalten und/oder in der Flüssigkeit (9) in der Schwebe gehalten und/oder laufend zugeführt wird.

2. Verfahren nach Anspruch 1, **dadurch gekennzeichnet, dass** das herzustellende Gas Wasserstoff ist.

3. Verfahren nach Anspruch 1 oder 2, **dadurch gekennzeichnet, dass** die herzustellenden Gase Wasserstoff und Sauerstoff sind.

4. Verfahren nach einem der vorhergehenden Ansprüche, **dadurch gekennzeichnet, dass** die Flüssigkeit (9), die das oder ein herzustellendes Gas enthält, Wasser ist.

5. Verfahren nach einem der vorhergehenden Ansprüche, **dadurch gekennzeichnet, dass** der (10) ein saurer ist.

6. Verfahren nach einem der vorhergehenden Ansprüche, **dadurch gekennzeichnet, dass** der (10) gelförmig ist.

7. Verfahren nach einem der Ansprüche 5 bis 7, **dadurch gekennzeichnet, daß** der Ionenaustauscher (10) eine Matrix, Ankergruppen und auszutauschende Ionen aufweist.

8. Verfahren nach einem der vorhergehenden Ansprüche, **dadurch gekennzeichnet, dass** der Ionenaustauscher (10) gasliefernde Enzyme enthält.

9. Verfahren nach einem der vorhergehenden Ansprüche, **dadurch gekennzeichnet, dass** das Verfahren mehrstufig durchgeführt wird.

## Claims

1. A method of producing one or more gases in which a liquid (9) is electrolytically treated,
**characterized in that**
an ion exchanger (10) is present in the liquid (9) to which the or one of the gases to be produced adheres by ion exchange; and the ion exchanger is kept in motion and/or is kept in suspension in the liquid (9) and/or is supplied continuously.

2. A method in accordance with claim 1, **characterized in that** the gas to be produced is hydrogen.

3. A method in accordance with either of claims 1 or 2, **characterized in that** the gases to be produced are hydrogen and oxygen.

4. A method in accordance with any one of the preceding claims, **characterized in that** the liquid (9) containing the or a gas to be produced is water.

5. A method in accordance with any one of the preceding claims, **characterized in that** the ion exchanger (10) is an acid ion exchanger.

6. A method in accordance with any one of the preceding claims, **characterized in that** the ion exchanger (10) is of gel-like form.

7. A method in accordance with any one of the claims 5 to 7, **characterized in that** the ion exchanger (10) comprises a matrix, active groups and ions to be exchanged.

8. A method in accordance with any one of the preceding claims, **characterized in that** the ion exchanger (10) contains gas delivering enzymes.

9. A method in accordance with any one of the preceding claims, **characterized in that** the method is carried out in multiple stages.

## Revendications

1. Procédé pour produire un ou plusieurs gaz, dans lequel un liquide (9) est traité par voie électrolytique,
**caractérisé en ce que**
dans le liquide (9) se trouve un échangeur d'ions (10), auquel le ou un des gaz à produire est lié par liaison ionique et **en ce que** l'échangeur d'ions est maintenu en mouvement et/ou est maintenu en suspension dans le liquide (9) et/ou est alimenté en continu.

2. Procédé selon la revendication 1, **caractérisé en ce que** le gaz à produire est de l'hydrogène.

3. Procédé selon la revendication 1 ou 2, **caractérisé en ce que** les gaz à produire sont de l'hydrogène et de l'oxygène.

4. Procédé selon l'une des revendications précédentes, **caractérisé en ce que** le liquide (9), qui contient le ou un gaz à produire, est de l'eau.

5. Procédé selon l'une des revendications précédentes, **caractérisé en ce que** l'échangeur d'ions (10) est un échangeur d'ions acide.

6. Procédé selon l'une des revendications précédentes, **caractérisé en ce que** l'échangeur d'ions (10) est sous forme de gel.

7. Procédé selon l'une des revendications 5 à 7, **caractérisé en ce que** l'échangeur d'ions (10) comporte une matrice, des groupes fonctionnels et des ions à échanger.

8. Procédé selon l'une des revendications précédentes, **caractérisé en ce que** l'échangeur d'ions (10) contient des enzymes de génération de gaz.

9. Procédé selon l'une des revendications précédentes, **caractérisé en ce que** le procédé est exécuté en plusieurs étapes.
